# EUROPÄISCHE PATENTSCHRIFT

(11) **EP 1 904 403 B1**
(45) Veröffentlichungstag und Bekanntmachung des Hinweises auf die Patenterteilung: **06.11.2013**
(21) Anmeldenummer: 06763729.8
(22) Anmeldetag: 14.06.2006
(51) Int. Cl.: C01B 35/04, B01J 19/08, B01J 19/12, C01B 35/10

(54) **VERFAHREN ZUR HERSTELLUNG VON NANOPARTIKULÄREN LANTHANOID/BOR-VERBINDUNGEN ODER VON NANOPARTIKULÄRE LANTHANOID/BOR-VERBINDUNGEN ENTHALTENDEN FESTSTOFFGEMISCHEN**
METHOD FOR PRODUCING NANOPARTICULATE LANTHANOIDE/BORON COMPOUNDS OR SOLID SUBSTANCE MIXTURES CONTAINING NANOPARTICULATE LANTHANOIDE/BORON COMPOUNDS
PROCEDE POUR PRODUIRE DES COMPOSES NANOPARTICULAIRES DE LANTHANIDE/BORE OU DES MELANGES DE MATIERES SOLIDES CONTENANT DES COMPOSES NANOPARTICULAIRES DE LANTHANIDE/BORE

(30) Priorität: 17.06.2005 DE 102005028463
(43) Veröffentlichungstag der Anmeldung: 02.04.2008
(73) Patentinhaber: BASF SE, 67056 Ludwigshafen (DE)
(72) Erfinder: PRÖLSS, Julian, 67549 Worms (DE); BRAMNIK, Kirill, 68163 Mannheim (DE); WAGNER, Norbert, 67112 Mutterstadt (DE); NORDMANN, Gero, 69120 Heidelberg (DE); HAMMERMANN, Markus, 69221 Dossenheim (DE); BENÖHR, Alexander, 67346 Speyer (DE)
(86) Internationale Anmeldenummer: PCT/EP2006/063235
(87) Internationale Veröffentlichungsnummer: WO 2006/134141

(56) Entgegenhaltungen:
- WO-A-02/066374
- JP-A- 1 320 216
- JP-A- 55 140 715
- JP-A- 2004 277 274

## Beschreibung

Die vorliegende Erfindung betrifft ein Verfahren zur Herstellung von im Wesentlichen isometrischen nanopartikulären Lanthanoid/Bor-Verbindungen oder von Feststoffgemischen, welche im Wesentlichen isometrische nanopartikuläre Lanthanoid/Bor-Verbindungen enthalten, wobei die im Wesentlichen isometrischen nanopartikulären Lanthanoid/Bor-Verbindungen gekennzeichnet sind durch eine Teilchengrößenverteilung, deren Standardabweichung σ kleiner als 1,5 ist welches dadurch gekennzeichnet ist, dass man
a)
   i) eine oder mehrere Lanthanoidverbindungen ausgewählt aus der Gruppe bestehend aus Lanthanoidhydroxiden, Lanthanoidhydriden, Lanthanoidchalkogeniden, Lanthanoidhalogeniden, Lanthanoidboraten und Mischverbindungen der genannten Lanthanoidverbindungen,
b)
   ii) eine oder mehrere Verbindungen ausgewählt aus der Gruppe bestehend aus kristallinem Bor, amorphem Bor, Borcarbiden, Borhydriden und Borhalogeniden
      und
   iii) gegebenenfalls ein oder mehrere Reduktionsmittel ausgewählt aus der Gruppe bestehend aus Wasserstoff, Kohlenstoff, organischen Verbindungen, Erdalkalimetallen und Erdalkalimetallhydriden
      verteilt in einem inertem Trägergas miteinander vermischt,
c) die Mischung der Komponenten i), ii) und gegebenenfalls iii) im inerten Trägergas durch thermische Behandlung innerhalb einer Reaktionszone miteinander zur Reaktion kommen lässt,
d) das in Schritt b) durch thermische Behandlung erhaltene Reaktionsprodukt einer schnellen Abkühlung unterzieht und
e) anschließend eine Abscheidung des in Schritt c) abgekühlten Reaktionsprodukts herbeiführt,
   wobei man die Abkühlungsbedingungen in Schritt c) so wählt, dass das Reaktionsprodukt aus im Wesentlichen isometrischen nanopartikulären Lanthanoid/Bor-Verbindungen besteht oder im Wesentlichen isometrische nanopartikuläre Lanthanoid/Bor-Verbindungen enthält wobei die im Wesentlichen isometrischen nanopartikulären Lanthanoid/Bor-Verbindungen gekennzeichnet sind durch eine Teilchengrößenverteilung, deren Standardabweichung σ kleiner als 1,5 ist.

Nanopartikuläre Lanthanoid/Bor-Verbindungen, insbesondere Lanthanhexaborid-Nanopartikel, zeichnen sich durch ihre hervorragende Absorption von Strahlung im nahen und fernen infrarot aus. Dementsprechend fehlt es auch nicht an verschiedensten Verfahren zur Herstellung solcher Verbindungen, insbesondere des Lanthanhexaborids, der bei Weitem gebräuchlichsten Lanthanoid/Bor-Verbindung.

Während die meisten Herstellverfahren auf konventioneller Hochtemperaturumsetzung geeigneter Lanthanoid- und Bor-Vorläuferverbindungen und der Mahlung der entstehenden, grobteiligen Primärprodukte basieren, sind auch Verfahren bekannt, welche direkt nanopartikuläre Lanthanoid/Bor-Verbindungen liefern.

So wird nanopartikuläres Metallborid gemäß der Schrift JP-B 06-039326 durch Verdampfen des Borids eines Metalls der Gruppe Ia, IIa, IIIa, IVa, Va oder VIa des Periodensystems oder durch Verdampfen einer Mischung des entsprechenden Metalls mit Bor in einem Wasserstoff- oder Wasserstoff/Inertgas-Plasma und anschließender Kondensation erhalten.

Das Dokument WO 02/066374 offenbart ein Verfahren zur Herstellung von hochreinen Borid-Verbindungen mit feinen Korngrössen, dadurch gekennzeichnet, dass man ein Metalloxid (Lanthanoxid wird in einer Liste genannt), Boroxid und ein Reduktionsmittel (Kohlenstoff) verteilt in einem inerten Trägergas miteinander vermischt. Diese Mischung wird dann durch ein schnelles Verschieben durch zwei Heizzonen bei mehr als 1450°C im Gegenwart eines interten Gases zum Reagieren gebracht. Damit offenbart das Dokument WO 02/066374 ein Verfahren wobei die Feststoff-Gemische durch ein schnelles Verschieben durch die unterschiedlichen Hauptheizzonen des Ofens geführt werden. Dieses erlaubt eine Minimisierung der unerwünschten Verweilzeit bei unerwünschten Temperaturen oder Temperatur-Bereichen.

Somit können die Erhitzungsrate, die Reaktionstemperatur und die Abkühlungsbedingungen gezielt und genau eingestellt werden und somit wird die Herstellung von hochreinen Pulvern mit einer feinen Korngrössen gewährleistet.

Die Herstellung nanopartikulärer Metallboride durch Reaktion der Metallpulver und/oder Metallboridpulver mit Borpulver im Plasma eines inerten Gases beschreibt die Schrift JP-A 2003-261323.

Diesen beiden Plasmaverfahren ist gemeinsam, dass man von den entsprechenden Metallen oder Metallboriden ausgeht, welche selbst erst durch meist aufwändige und damit in der Regel energie- und kostenintensive Verfahren zugänglich sind. So werden etwa die Lanthanoidmetalle üblicherweise durch Schmelzelektrolyse aus den Lanthanoidhalogeniden hergestellt, da erstere ein ausgeprägt unedles elektrochemisches Verhalten zeigen.

Aufgabe der vorliegenden Erfindung ist somit eine Verfahrensweise zur Herstellung von Lanthanoid/Bor-Verbindungen zur Verfügung zu stellen, welche es ermöglicht, direkt von kostengünstigen Lanthanoidverbindungen auszugehen.

Dementsprechend wurde das eingangs beschriebene Verfahren gefunden.

Als Kompente i) des erfindungsgemäßen Verfahrens kommen eine oder mehrere Lanthanoidverbindungen ausgewählt aus der Gruppe bestehend aus Lanthanoidhydroxiden, Lanthanoidhydriden, Lanthanoidchalkogeniden, Lanthanoidhalogeniden, Lanthanoidboraten und Mischverbindungen der genannten Lanthanoidverbindungen in Frage. Als geeignete Lanthanoidhydroxide sind insbesondere die Hydroxide der dreiwertigen Lanthanoiden Ln(OH)₃ (im Folgenden wird dem üblichen Sprachgebrauch folgend ein nicht weiter spezifiziertes Lanthanoid-Element oder Yttrium mit "Ln" abgekürzt), als geeignete Lanthanoidhydride die Verbindungen LnH₂ und LnH₃, als geeignete Lanthanoidchalkogenide die Verbindungen LnS, LnSe und LnTe, insbesondere die Verbindungen Ln₂O₃ und Ln₂S₃, als Lanthanoidhalogenide insbesondere LnF₃, LnCl₃, LnBr₃ und LnI₃ und als Lanthanoidborate insbesondere LnBO₃, Ln₃BO₆ und Ln(BO₂)₃ zu nennen. Als geeignete Mischverbindungen kommen desweiteren in Frage LnO(OH), LnOF, LnOCl, LnOBr, LnSF, LnSCl, LnSBr und Ln₂O₂S.

Bevorzugt verwendet man im erfindungsgemäßen Verfahren als Komponente i) eine oder mehrere Lanthanoidverbindungen ausgewählt aus der Gruppe bestehend aus Lanthanoidhydroxiden, Lanthanoidchalkogeniden, Lanthanoidhalogeniden und Mischverbindungen der genannten Lanthanoidverbindungen, besonders bevorzugt eine oder mehrere Lanthanoidverbindungen ausgewählt aus der Gruppe bestehend aus Lanthanoidhydroxiden, Lanthanoidoxiden, Lanthanoidchloriden, Lanthanoidbromiden und Mischverbindungen der genannten Lanthanoidverbindungen. Besonders bevorzugte Lanthanoidverbindungen sind insbesondere die bereits zuvor aufgeführten Verbindungen der dreiwertigen Lanthanoiden Ln(OH)₃, Ln₂O₃, LnCl₃, LnBr₃, LnO(OH), LnOCl und LnOBr.

Ganz besonders bevorzugt verwendet man im erfindungsgemäßen Verfahren als Komponente i) eine oder mehrere Lanthanverbindungen, wobei die vorherigen Bevorzugungen auch hinsichtlich der Lanthanverbindungen Anwendung finden. Insbesonders sind geeignete Lanthanverbindungen La(OH)₃, La₂O₃, LaCl₃, LaBr₃, LaO(OH), LaOCl und LaOBr.

Als Komponente ii) des erfindungsgemäßen Verfahrens kommen eine oder mehrere Verbindungen ausgewählt aus der Gruppe bestehend aus kristallinem Bor, amorphem Bor, Borcarbiden, Borhydriden und Borhalogeniden in Frage. Unter den Borcarbiden sind insbesondere das B₄C, unter den Borhydriden insbesondere das B₂H₆ und unter den Borhalogeniden insbesondere das Bortrifluorid, Bortrichlorid und Bortribromid zu nennen.

Bevorzugt verwendet man im erfindungsgemäßen Verfahren und seinen bevorzugten Ausführungsformen als Komponente ii) eine oder mehrere Verbindungen ausgewählt aus der Gruppe bestehend aus kristallinem Bor, amorphem Bor und Borhalogeniden, besonders bevorzugt eine oder mehrere Verbindungen ausgewählt aus der Gruppe bestehend aus kristallinem Bor, amorphem Bor, Bortrichlorid und Bortribromid.

Als Komponente iii) des erfindungsgemäßen Verfahrens kommen gegebenenfalls ein oder mehrere Reduktionsmittel ausgewählt aus der Gruppe bestehend aus Wasserstoff, Kohlenstoff, organischen Verbindungen, Erdalkalimetallen und Erdalkalimetallhydriden in Frage.

Organische Verbindungen als Reduktionsmittel sind beispielsweise gasförmige oder flüssige Kohlenwasserstoffe. Hier sind zu nennen aliphatische Verbindungen mit ein bis typischerweise ca. 20 Kohlenstoffatomen, beispielsweise Alkane, wie Methan, Ethan, Propan, Butan, Isobutan, Octan und Isooctan, Alkene und Alkadiene, wie Ethylen, Propylen, Buten, lsobuten und Butadien, und Alkine, wie Acetylen und Propin, cycloaliphatische Verbindungen mit drei bis typischerweise 20 Kohlenstoffatomen, beispielsweise Cycloalkane, wie Cyclopropan, Cyclobutan, Cyclopentan, Cyclohexan, Cycloheptan und Cyclooctan, Cycloalkene und Cycloalkadiene, wie Cyclopropen, Cyclobuten, Cyclopenten, Cyclohexen, Cyclohepten, Cycloocten und Cyclooctadien sowie aromatische, gegebenenfalls höherkondensierte Kohlenwasserstoffe mit sechs bis typischerweise 20 Kohlenstoffatomen, beispielsweise Benzol, Naphthalin und Anthracen. Sowohl die cycloaliphatischen Verbindungen als auch die aromatischen Kohlenwasserstoffe können noch mit ein oder mehreren aliphatischen Resten substituiert oder mit cycloaliphatischen Verbindungen anelliert sein. Beispielsweise sind hier als mögliche Reduktionsmittel zu nennen Toluol, Xylol, Ethylbenzol, Tetralin, Dekalin und Dimethylnaphthalin. Desweiteren kommen auch Mischungen der vorgenannten aliphatischen, cycloaliphatischen und aromatischen Verbindungen als mögliche Reduktionsmittel in Frage. Beispielsweise sind hier zu nennen Mineralölprodukte, wie Petrolether, Leichtbenzin, Mittelbenzin, Testbenzin, Kerosin, Dieselöl und Heizöl.

Als Reduktionsmittel können auch organische Flüssigkeiten, beispielsweise Alkohole, wie Methanol, Ethanol, Propanol, Isopropanol, Butanol, Isobutanol, sec-Butanol, Pentanol, Isopentanol, Neopentanol und Hexanol, Glykole, wie 1,2-Ethylenglykol, 1,2- und 1,3-Propylenglykol, 1,2-, 2,3- und 1,4-Butylenglykol, Di- und Triethylenglykol und Diund Tripropylenglykol, Ether, wie Dimethyl-, Diethyl- und Methyltertbutylether, 1,2Ethylenglykolmono- und -dimethylether, 1,2-Ethylenglykolmono- und -diethylether, 3-Methoxypropanol, 3-lsopropoxypropanol, Tetrahydrofuran und Dioxan, Ketone, wie Aceton, Methylethylketon und Diacetonalkohol, Ester, wie Essigsäuremethylester, Essigsäureethylester, Essigsäurepropylester oder Essigsäurebutylester, sowie natürliche Öle, wie Olivenöl, Sojaöl und Sonnenblumenöl verwendet werden.

Im Hinblick auf die Verteilung der Komponenten i), ii) und gegebenenfalls iii) im inerten Trägergas ist deren Aggregatzustand von Bedeutung.

Im Falle von festen Stoffen kann die Verteilung der Komponenten i), ii) und gegebenenfalls iii) mit Hilfe von entsprechenden, dem Fachmann bekannten Aggregaten, z.B. mittels Bürstendosierer oder Förderschnecke, und anschließender Flugstromförderung bewerkstelligt werden. Die festen Stoffe bilden dann mit dem Trägergas vorzugsweise Aerosole, in welchen die Teilchengrößen der festen Stoffe im gleichen Bereich liegen können, wie die der nach dem erfindungsgemäßen Verfahren erhältlichen nanopartikulären Lanthanoid/Bor-Verbindungen. Die mittlere Aggregatgröße der festen Komponenten liegt dabei typischerweise bei 0,1 bis 500 µm, bevorzugt bei 0,1 bis 50 µm, besonders Bevorzugt bei 0,5 bis 5 µm. Bei größeren mittleren Aggregatgrößen besteht die Gefahr eine unvollständige Überführung in die Gasphase, so dass solche größeren Partikel nicht oder nur unvollständig für die Reaktion zur Verfügung stehen. Gegebenenfalls kann an unvollständig verdampften Teilchen eine Oberflächenreaktion zu deren Passivierung führen.

Im Falle von flüssigen Stoffen kann die Verteilung in Form von Dampf oder Flüssigkeitströpfchen ebenfalls mit Hilfe von entsprechenden, dem Fachmann bekannten Aggregaten bewerkstelligt werden. Beispielsweise sind dies Verdampfer, wie etwa Dünnschichtverdampfer oder Flashverdampfer, eine Kombination aus Zerstäubung und Flugstromverdampfer, eine Verdampfung in Gegenwart einer exothermen Reaktion (kalte Flamme), etc. Eine unvollständige Reaktion des zerstäubten flüssigen Einsatzstoffes ist in der Regel nicht zu befürchten, sofern die Flüssigkeitströpfchen die für Aerosole typischen Teilchenabmessungen kleiner 50 µm aufweisen.

Die verschiedenen Komponenten i), ii) und gegebenenfalls iii) können bereits gemischt im Trägergas vorliegen, sie können jedoch auch in jeweils getrennten Trägergasströmen eingeleitet werden, wobei in letzterem Fall ihre Durchmischung vorteilhaft vor Eintritt in die Reaktionszone vorgenommen wird.

Desweiteren können feste Komponenten i), ii) und/oder gegebenenfalls iii) in Gegenwart des Trägergases bereits vor Eintritt in die Reaktionszone in die Gasphase überführt werden. Dies lässt sich beispielsweise mit denselben Methoden bewerkstelligen, welche in Schritt b) des erfindungsgemäßen Verfahrens zur thermischen Behandlung der Mischung der Komponenten i), ii) und gegebenenfalls iii) in der Reaktionszone Verwendung finden. So können die Komponente i), ii) und gegebenenfalls iii), vorzugsweise einzeln, insbesondere mittels Mikrowellenplasma, Lichtbogenplasma, Konvektions-/Strahlungsbeheizung oder autothermer Reaktionsführung verdampft und in das Trägergas eingebracht werden.

Als inertes Trägergas wird üblicherweise ein Edelgas, wie Helium oder Argon, oder Edelgasgemisch, beispielsweise aus Helium und Argon, verwendet. Im speziellen Fall kann auch Stickstoff, gegebenenfalls im Gemisch mit den zuvor angeführten Edelgasen, als Trägergas Verwendung finden, doch muss hier bei höheren Temperaturen und abhängig von der Natur der Komponenten i), ii) und/oder gegebenenfalls iii) mit der Bildung von Nitriden gerechnet werden.

Werden feste Komponenten i), ii) und gegebenenfalls iii) verwendet und jeweils separat durch das Trägergas in die Reaktionszone transportiert, beträgt die Beladung des Trägergases üblicherweise jeweils 0,01 bis 5,0 g/l, vorzugsweise 0,05 bis 1 g/l. Für den Fall, dass feste Komponenten i), ii) und gegebenenfalls iii) verwendet und bereits als Mischung durch das Trägergas in die Reaktionszone transportiert werden, beträgt die Beladung des Trägergases mit der Gesamtmenge der festen Komponenten i), ii) und gegebenenfalls iii) üblicherweise 0,01 bis 2,0 g/l, vorzugsweise 0,05 bis 0,5 g/l.

Im Falle von flüssigen und gasförmigen Komponenten i), ii) und gegebenenfalls iii) sind im Allgemeinen höhere Beladungen als zuvor genannt möglich. Die für die jeweiligen Verfahrensbedingungen geeigneten Beladungen sind durch entsprechende Vorversuche meist leicht zu ermitteln.

Das Verhältnis von Komponente i) zu Komponente ii) richtet sich im Wesentlichen nach der Stöchiometrie der gewünschten Lanthanoid/Bor-Verbindung. Da in der Regel das Lanthanoidhexaborid als stabile Phase entsteht bzw. als Reaktionsprodukt erhalten werden soll, setzt man die eine oder mehrere Lanthanoidverbindungen der Komponente i) und die eine oder mehrere Borverbindungen der Komponente ii) in einem molaren Verhältnis Ln : B von etwa 1 : 6 ein. Soll im Reaktionsprodukt die Anwesenheit eines Nebenprodukts reduziert oder verhindert werden, welches aus einem der Reaktanden (d.h. Komponente i) bzw. Komponente ii)) oder einer aus dem Reaktanden entstandenen Verbindung besteht, so kann es vorteilhaft sein, den Gegenreaktanden (d.h. dementsprechend Komponente ii) bzw. Komponente i)) in einem entsprechenden Überschuss einzusetzen.

Die in die Reaktionszone eingebrachten Komponenten i), ii) und gegebenenfalls iii) werden dort in Schritt c) des erfindungsgemäßen Verfahrens durch thermische Behandlung, d.h. Aufheizung auf hohe Temperaturen, miteinander zur Reaktion gebracht, wobei hierfür insbesondere Mikrowellenplasma, Lichtbogenplasma, Konvektions/Strahlungsbeheizung, autotherme Reaktionsführung oder eine Kombination der vorgenannten Methoden in Frage kommen.

Entsprechend Verfahrensweisen und Verfahrensbedingungen, um durch Mikrowellenplasma, Lichtbogenplasma, Konvektions-/Strahlungsbeheizung, autotherme Reaktionsführung oder eine Kombination der vorgenannten Methoden eine Aufheizung der Komponenten in der Reaktionszone herbeizuführen, sind dem Fachmann hinreichend bekannt.

Um im Wesentlichen isometrische, d.h. hinsichtlich ihrer Größe und Morphologie im Wesentlichen einheitliche nanepartikuläre Lanthanoid/Bor-Verbindungen oder entsprechende Feststoffgemische zu erhalten wobei die im Wesentlichen isometrischen nanopartikulären Lanthanoid/Bor-Verbindungen gekennzeichnet sind durch eine Teilchengrößenverteilung, deren Standardabweichung σ kleiner als 1,5 ist, welche im Wesentlichen isometrische nanopartikuläre Lanthanoid/Bor-Verbindungen enthalten, ist es, wie dem Fachmann allgemein bekannt, von Vorteil, die Bedingungen in der Reaktionszone räumlich und zeitlich zu stabilisieren. Hierdurch wird gewährleistet, dass die Komponenten i), ii) und gegebenenfalls iii) während der Reaktion nahezu identischen Bedingungen ausgesetzt sind und somit zu einheitlichen Produktteilchen reagieren.

Die Verweilzeit der Mischung aus den Komponente i),ii) und gegebenenfalls iii) in der Reaktionszone beträgt üblicherweise 0,002 s bis 2 s, typischerweise 0,005 s bis 0,2 s.

Bei authothermer Reaktionsführung werden zur Erzeugung der Flamme insbesondere Mischungen von Wasserstoff- und Halogengas, insbesondere Chlorgas, verwendet. Desweiteren kann die Flamme auch mit Mischungen aus Methan, Ethan, Propan, Butanen, Ethylen oder Acetylen oder auch Mischungen der vorgenannten Gase einerseits und Sauerstoffgas andererseits erzeugt werden, wobei letzteres vorzugsweise im Unterschuss verwendet wird, um reduzierende Bedingungen in der Reaktionszone der authothermen Flamme zu erhalten.

Im Rahmen einer bevorzugten Ausführungsform erfolgt die thermische Behandlung durch Mikrowellenplasma.

Als Gas oder Gasgemisch zur Erzeugung des Mikrowellenplasmas wird üblicherweise ein Edelgas, wie Helium oder Argon, oder Edelgasgemisch, beispielsweise aus Helium und Argon, verwendet.

Desweiteren verwendet man in der Regel ein Schutzgas, welches eine Gasschicht zwischen der Wand des für die Erzeugung des Mikrowellenplasmas verwendeten Reaktors und die Reaktionszone legt, wobei letztere im Wesentlichen dem Bereich entspricht, in welchem sich das Mikrowellenplasma im Reaktor befindet.

Die in das Mikrowellenplasma eingebrachte Leistung liegt in der Regel in einem Bereich von einigen kW bis mehrere 100 kW. Auch Quellen für Mikrowellenplasma größerer Leistung können grundsätzlich für die Synthese eingesetzt werden. Im Übrigen ist die Verfahrensweise zur Erzeugung einer stationären Plasmaflamme dem Fachmann geläufig, insbesondere im Hinblick auf eingebrachte Mikrowellenleistung, Gasdruck, Gasmengen für das Plasma- und Schutzgas.

Im Laufe der Reaktion in Schritt b) entstehen nach erfolgter keimbildung zunächst nanopartikuläre Primärpartikel, welche durch Koagulations- und Koaleszenzvorgänge in der Regel einem weiteren Partikelwachstum unterliegen. Partikelbildung und Partikelwachstum erfolgen typischerweise in der gesamten Reaktionszone und können auch noch nach Verlassen der Reaktionszone bis zur schnellen Abkühlung weiter fortschreiten. Entstehen während der Reaktion, neben den gewünschten Lanthaoid/BorVerbindungen, noch weitere feste Produkte, so können die gebildeten unterschiedlichen Primärpartikel auch miteinander agglomerieren, wobei nanopartikuläre Feststoff-gemische entstehen. Erfolgt während der Reaktion die Bildung mehrerer verschiedener Feststoffe zu unterschiedlichen Zeiten, so können auch umhüllte Produkte entstehen, bei denen die zuerst gebildeten Primärpartikel des einen Produkts von Schichten eines oder mehrerer anderer Produkte umgeben sind. Die Steuerung dieser Agglomerationsprozesse kann beispielsweise durch die chemische Natur der Komponenten i), ii) und gegebenenfalls iii) im Trägergas, die Höhe der Beladung des Trägergases mit den Komponenten, die Anwesenheit von mehr als einer der Komponenten i), ii) und gegebenenfalls iii) in demselben Trägergasstrom sowie deren Mischungsverhältnis darin, die Bedingungen der thermischen Behandlung in der Reaktionszone aber auch durch Art und Zeitpunkt der in Schritt c) erfolgenden Abkühlung des Reaktionsprodukts gesteuert werden.

Die Abkühlung in Schritt c) kann durch direkte Kühlung (Quenchen), indirekte Kühlung, Expansionskühlung (adiabatische Entspannung) oder einer Kombination dieser Abkühlmethoden erfolgen. Bei der direkten Kühlung wird ein Kühlmittel mit dem heißen Reaktionsprodukt in direkten Kontakt gebracht, um dieses abzukühlen. Bei der indirekten Kühlung wird dem Reaktionsprodukt Wärmeenergie entzogen, ohne das es direkt mit einem Kühlmittel in Kontakt kommt. Die indirekte Kühlung ermöglicht in der Regel eine effektive Nutzung der auf das Kühlmittel übertragenen Wärmeenergie. Dazu kann das Reaktionsprodukt mit den Austauschflächen eines geeigneten Wärmetauschers in Kontakt gebracht werden. Das erwärmte Fühlmittel kann beispielsweise zur Erwärmung/Vorwärmung oder Verdampfung der festen, flüssigen oder gasförmigen Komponenten i), ii) und gegebenenfalls iii) eingesetzt werden.

Die Abkühlungsbedingungen in Schritt c) werden hierbei so gewählt, dass das Reaktionsprodukt aus im Wesentlichen isometrischen nanopartikulären Lanthanoid/BorVerbindungen besteht oder im Wesentlichen isometrische nanopartikuläre Lanthanoid/Bor-Verbindungen enthält wobei die im Wesentlichen isometrischen nanopartikulären Lanthanoid/Bor-Verbindungen gekennzeichnet sind durch eine Teilchengrößenverteilung, deren Standardabweichung σ kleiner als 1,5 ist. Insbesondere muss Sorge dafür getragen werden, dass sich keine Primärteilchen auf heißen Oberflächen des verwendeten Reaktors abscheiden können und dabei insbesondere thermischen Bedingungen ausgesetzt sind, welche ein weiteres, gerichtetes Wachstum dieser Primärteilchen begünstigen.

Vorzugsweise wird das erfindungsgemäße Verfahren so durchgeführt, dass in Schritt c) das erhaltene Reaktionsprodukt auf eine Temperatur im Bereich von 1800°C bis 20°C abgekühlt wird.

Zur Abscheidung des in Schritt c) erhaltenen Reaktionsprodukts wird es in Schritt d) wenigstens einem Auftrennungs- und/oder Reinigungsschritt unterzogen. Dabei werden die gebildeten nanopartikulären Lanthnoid/Bor-Verbindungen von den übrigen Bestandteilen des Reaktionsprodukts isoliert. Hierzu können übliche, dem Fachmann bekannte Abscheideeinrichtungen, wie beispielsweise Filter, Zyklone, Trocken- oder Nasselektroabscheider oder Venturi-Wäscher eingesetzt werden. Gegebenenfalls können die gebildeten nanopartikulären Verbindungen während der Abscheidung fraktioniert werden, z.B. durch fraktionierende Abscheidung. Prinzipiell ist anzustreben, durch entsprechende Verfahrensführung, insbesondere durch Wahl geeigneter Ausgangsstoffe, Lanthanoid/Bor-Verbindungen ohne oder zumindest mit nur geringen Anteilen an Nebenprodukten zu erhalten.

Die Teilchengröße der nach dem erfindungsgemäßen Verfahren hergestellten nanopartikulären Lanthanoid/Bor-Verbindungen liegt üblicherweise im Bereich von 1 bis 500 nm, insbesondere im Bereich von 2 bis 150 nm. Die nach dem erfindungsgemäßen Verfahren hergestellten nanopartikulären Lanthanoid/Bor-Verbindungen weisen eine Teilchengrößenverteilung auf, deren Standardabweichung σ kleiner als 1,5 ist. Im Fall der Entstehung eines festen Nebenproduktes kann eine bimodale Verteilung auftreten, wobei die Standardabweichung der Lanthanoid/Bor-Verbindungen α wiederum kleiner als 1,5 ist.

Das erfindungsgemäße Verfahren lässt sich bei beliebigem Druck durchführen. Bevorzugt wird im Bereich von 10 hPa bis 5 000 hPa gearbeitet. Insbesondere ist auch die Durchführung des erfindungsgemäßen Verfahrens bei atmosphärischem Druck möglich.

Das erfindungsgemäße Verfahren eignet sich zur kontinuierlichen Herstellung von im Wesentlichen isometrischen nanopartikulären Lanthnoid/Bor-Verbindungen unter im Wesentlichen stationären Bedingungen. Bezeichnend für dieses Verfahrens sind eine schnelle Energiezufuhr auf hohem Temperaturniveau, in der Regel gleichförmige Verweilzeiten der Edukte bzw. des Reaktionsprodukts unter den Bedingungen in der Reaktionszone und ein rasches Abkühlen ("Abschrecken") des Reaktionsprodukts, um ein Agglomerieren und insbesondere gerichtetes Wachstum der gebildeten nanopartikulären Primärpartikel zu vermeiden.

### Beispiel 1:

Mit einer Dosierrate von 20 g/h wird eine hochdisperse Mischung aus 40 Gew.-% amorphem Bor und 60 Gew.-% La₂O₃ (molverhältnis La : B=1 : 10) in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man eine Mischung mit bimodaler Teilchengrößenverteilung, die überwiegend aus B₂O₃ einer mittleren Teilchengröße von ca. 30 nm und LaB₆ einer mittleren Teilchengröße von ca. 100 nm besteht.

### Beispiel 2:

Mit einer Dosierrate von 20 g/h wird eine hochdisperse Mischung aus 39 Gew.-% amorphem Bor und 61 Gew.-% CeO₂ in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man eine Mischung mit bimodaler Teilchengrößenverteilung, die überwiegend aus B₂O₃ einer mittleren Teilchengröße von ca. 30 nm und CeB₆ einer mittleren Teilchengröße von ca. 100 nm besteht.

### Beispiel 3:

Mit einer Dosierrate von 20 g/h wird eine hochdisperse Mischung aus 36 Gew.-% amorphem Bor und 64 Gew.-% CeF₃ in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man CeB₆ einer mittleren Teilchengröße von ca. 100 nm.

### Beispiel 4:

Mit einer Dosierrate von 20 g/h wird eine hochdisperse Mischung aus 39 Gew.-% amorphem Bor und 61 Gew.-% Nd₂O₃ in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man eine Mischung mit bimodaler Teilchengrößenverteilung, die überwiegend aus B₂O₃ einer mittleren Teilchengröße von ca. 30 nm und NdB₆ einer rriittleren Teilchengröße von ca. 100 nm besteht.

### Beispiel 5:

Mit einer Dosierrate von 20 g/h wird eine hochdisperse Mischung aus 35 Gew.-% amorphem Bor und 65 Gew.-% NdF₃ in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man NdB₆ einer mittleren Teilchengröße von ca. 100 nm.

### Beispiel 6:

Mit einer Dosierrate von 20 g/h wird eine hochdisperse Mischung aus 49 Gew.-% amorphem Bor und 51 Gew.-% Y₂O₃ in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man eine Mischung mit bimodaler Teilchengrößenverteilung, die überwiegend aus B₂O₃ einer mittleren Teilchengröße von ca. 30 nm und YB₆ einer mittleren Teilchengröße von ca. 100 nm besteht.

### Beispiel 7:

Mit einer Dosierrate von 20 g/h wird eine hochdisperse Mischung aus 36 Gew.-% amorphem Bor und 64 Gew.-% YCl₃ in einem Ar-Trägergasstrom (180 l/h) einem Mikrowellenplasma zugeführt. Zusätzlich wird dem Plasma ein Strom von 3,6 m³_{N}/h einer Gasmischung aus 75 Vol-% Ar, 10 Vol-% Wasserstoff und 15 Vol-% He zugegeben. Das Plasma wird mit einer Leistung von 30 kW angeregt. Nach der Reaktion wird das Reaktionsgas sehr schnell gequencht und die entstandenen Teilchen abgeschieden. Als Reaktionsprodukt erhält man YB₆ einer mittleren Teilchengröße von ca. 100 nm.

### Beispiel 8:

Mit einer Dosierrate von 80 g/h wird hochdisperses LaCl₃ zusammen mit 45 g/h eines B₂H₆-Stroms (Molverhältnis La : B = 1 : 10) in einem Ar/H₂-Trägergasstrom (640 l/h, Molverhältnis Ar : H₂ = 10 : 1) einem Lichtbogenplasma zugeführt. Zusätzlich wird dem Plasma ein Ar-Strom von 12 m³_{N}/h zugegeben. Das Plasma wird mit einer Leistung von 70 kW angeregt. Nach der Reaktion wird das Reaktionsgas sehr schnell gequencht und die entstandenen Teilchen abgeschieden. Als Reaktionsprodukt erhält man eine Mischung mit bimodaler Teilchengrößenverteilung, die überwiegend aus B₂O₃ einer mittleren Teilchengröße von ca. 20 nm und LaB₆ einer mittleren Teilchengröße von ca. 70 nm besteht.

## Patentansprüche

1. Verfahren zur Herstellung von im Wesentlichen isometrischen nanopartikulären Lanthanoid/Bor-Verbindungen oder von Feststoffgemischen, welche im Wesentlichen isometrische nanopartikuläre Lanthanoid/Bor-Verbindungen enthalten, **dadurch gekennzeichnet, dass** man
a)
i) eine oder mehrere Lanthanoidverbindungen ausgewählt aus der Gruppe bestehend aus Lanthanoidhydroxiden, Lanthanoidhydriden, Lanthanoidchalkogeniden, Lanthanoidhalogeniden, Lanthanoidboraten und Mischverbindungen der genannten Lanthanoidverbindungen,
ii) eine oder mehrere Verbindungen ausgewählt aus der Gruppe bestehend aus kristallinem Bor, amorphem Bor, Borcarbiden, Borhydriden und Borhalogeniden
und
iii) gegebenenfalls ein oder mehrere Reduktionsmittel ausgewählt aus der Gruppe bestehend aus Wasserstoff, Kohlenstoff, organischen Verbindungen, Erdalkalimetallen und Erdalkalimetallhydriden
verteilt in einem inertem Trägergas miteinander vermischt,
b) die Mischung der Komponenten i), ii) und gegebenenfalls iii) im inerten Trägergas durch thermische Behandlung innerhalb einer Reaktionszone miteinander zur Reaktion kommen lässt,
c) das in Schritt b) durch thermische Behandlung erhaltene Reaktionsprodukt einer schnellen Abkühlung unterzieht und
d) anschließend eine Abscheidung des in Schritt c) abgekühlten Reaktionsprodukts herbeiführt,
wobei man die Abkühlungsbedingungen in Schritt c) so wählt, dass das Reaktionsprodukt aus im Wesentlichen isometrischen nanopartikulären Lanthanoid/Bor-Verbindungen besteht oder im Wesentlichen isometrische nanopartikuläre Lanthanoid/Bor-Verbindungen enthält, wobei die im Wesentlichen isometrischen nanopartikulären Lanthanoid/Bor-Verbindungen eine Teilchengrößenverteilung aufweise, deren Standardabweichung σ kleiner als 1,5 ist.

2. Verfahren nach Anspruch 1, **dadurch gekennzeichnet, dass** in Schritt b) die thermische Behandlung der Mischung der Komponenten i), ii) und gegebenenfalls iii) im inerten Trägergas durch Mikrowellenplasma, Lichtbogenplasma, Konvektions-/Strahlungsbeheizung, autotherme Reaktionsführung oder eine Kombination der vorgenannten Methoden bewirkt wird.

3. Verfahren nach Anspruch 1, **dadurch gekennzeichnet, dass** in Schritt b) die thermische Behandlung der Mischung der Komponenten i), ii) und gegebenenfalls iii) im inerten Trägergas durch Mikrowellenplasma bewirkt wird.

4. Verfahren nach einem oder mehreren der Ansprüche 1 bis 3, **dadurch gekennzeichnet, dass** in Schritt c) das erhaltene Reaktionsprodukt auf eine Temperatur im Bereich von 1800°C bis 20°C abgekühlt wird.

5. Verfahren nach einem oder mehreren der Ansprüche 1 bis 4, **dadurch gekennzeichnet, dass** man als Komponente i) eine oder mehrere Lanthanoidverbindungen ausgewählt aus der Gruppe bestehend aus Lanthanoidhydroxiden, Lanthanoidchalkogeniden, Lanthanoidhalogeniden und Mischverbindungen der genannten Lanthanoidverbindungen verwendet.

6. Verfahren nach einem oder mehreren der Ansprüche 1 bis 4, **dadurch gekennzeichnet, dass** man als Komponente i) eine oder mehrere Lanthanoidverbindungen ausgewählt aus der Gruppe bestehend aus Lanthanoidhydroxiden, Lanthanoidoxiden, Lanthanoidchloriden, Lanthanoidbromiden und Mischverbindungen der genannten Lanthanoidverbindungen verwendet.

7. Verfahren nach einem oder mehreren der Ansprüche 1 bis 6, **dadurch gekennzeichnet, dass** man als Komponente i) eine oder mehrere Lanthanverbindungen verwendet.

8. Verfahren nach einem oder mehreren der Ansprüche 1 bis 7, **dadurch gekennzeichnet, dass** man als Komponente ii) eine oder mehrere Verbindungen ausgewählt aus der Gruppe bestehend aus kristallinem Bor, amorphem Bor und Borhalogeniden verwendet.

9. Verfahren nach einem oder mehreren der Ansprüche 1 bis 7, **dadurch gekennzeichnet, dass** man als Komponente ii) eine oder mehrere Verbindungen ausgewählt aus der Gruppe bestehend aus kristallinem Bor, amorphem Bor, Bortrichlorid und Bortribromid verwendet.

10. Verfahren nach einem oder mehreren der Ansprüche 1 bis 9, **dadurch gekennzeichnet, dass** man es in einem Druckbereich von 500 hPa bis 2 000 hPa durchführt.

## Claims

1. A process for preparing essentially isometric nanoparticulate lanthanide-boron compounds or solid mixtures comprising essentially isometric nanoparticulate lanthanide-boron compounds, which comprises
a) mixing
i) one or more lanthanide compounds selected from the group consisting of lanthanide hydroxides, lanthanide hydrides, lanthanide chalcogenides, lanthanide halides, lanthanide borates and mixed compounds of the lanthanide compounds mentioned,
ii) one or more compounds selected from the group consisting of crystalline boron, amorphous boron, boron carbides, boron hydrides and boron halides
and
iii) optionally one or more reducing agents selected from the group consisting of hydrogen, carbon, organic compounds, alkaline earth metals and alkaline earth metal hydrides
dispersed in an inert carrier gas with one another,
b) reacting the mixture of the components i), ii) and optionally iii) in the inert carrier gas by means of thermal treatment within a reaction zone,
c) subjecting the reaction product obtained by means of thermal treatment in step b) to rapid cooling and
d) subsequently separating off the reaction product which has been cooled in step c),
with the cooling conditions in step c) being selected so that the reaction product consists of essentially isometric nanoparticulate lanthanide-boron compounds or comprises essentially isometric nanoparticulate lanthanide-boron compounds, with the essentially isometric nanoparticle lanthanide-boron compounds having a particle size distribution whose standard deviation σ is less than 1.5.

2. The process according to claim 1, wherein the thermal treatment of the mixture of the components i), ii) and, if appropriate, iii) in the inert carrier gas is effected by means of microwave plasma, electric arc plasma, convection/radiation heating, autothermal reaction conditions or a combination of the abovementioned methods in step b).

3. The process according to claim 1, wherein the thermal treatment of the mixture of the components i), ii) and optionally iii) in the inert carrier gas is effected by means of microwave plasma in step b).

4. The process according to one or more of claims 1 to 3, wherein the reaction product obtained is cooled to a temperature in the range from 1800°C to 20°C in step c).

5. The process according to one or more of claims 1 to 4, wherein one or more lanthanide compounds selected from the group consisting of lanthanide hydroxides, lanthanide chalcogenides, lanthanide halides and mixed compounds of the lanthanide compounds mentioned is/are used as component i).

6. The process according to one or more of claims 1 to 4, wherein one or more lanthanide compounds selected from the group consisting of lanthanide hydroxides, lanthanide oxides, lanthanide chlorides, lanthanide bromides and mixed compounds of the lanthanide compounds mentioned is/are used as component i).

7. The process according to one or more of claims 1 to 6, wherein one or more lanthanum compounds is/are used as component i).

8. The process according to one or more of claims 1 to 7, wherein one or more compounds selected from the group consisting of crystalline boron, amorphous boron and boron halides is/are used as component ii).

9. The process according to one or more of claims 1 to 7, wherein one or more compounds selected from the group consisting of crystalline boron, amorphous boron, boron trichloride and boron tribromide is/are used as component ii).

10. The process according to one or more of claims 1 to 9 carried out in a pressure range from 500 hPa to 2000 hPa.

## Revendications

1. Procédé pour la préparation de composés de bore/lanthanide nanoparticulaires essentiellement isométriques ou de mélanges de matières solides qui contiennent des composés de bore/lanthanide nanoparticulaires essentiellement isométriques, **caractérisé en ce que**
a) on mélange entre eux, dispersés dans un gaz vecteur inerte
i) un ou plusieurs composés de lanthanides, choisis dans le groupe constitué par les hydroxydes de lanthanides, hydrures de lanthanides, chalcogénures de lanthanides, halogénures de lanthanides, borates de lanthanides et des composés mixtes à base desdits composés de lanthanides,
ii)un ou plusieurs composés choisis dans le groupe constitué par le bore cristallin, le bore amorphe, les carbures de bore, les hydrures de bore et les halogénures de bore
et
iii) éventuellement un ou plusieurs réducteurs choisis dans le groupe constitué par l'hydrogène, le carbone, des composés organiques, des métaux alcalino-terreux et des hydrures de métaux alcalino-terreux,
b) on fait entrer en réaction le mélange des composants i), ii) et éventuellement iii) entre eux dans le gaz vecteur inerte, par traitement thermique à l'intérieur d'une zone de réaction,
c) on soumet à un refroidissement rapide le produit de réaction obtenu par traitement thermique dans l'étape b) et
d) ensuite on provoque une séparation du produit de réaction refroidi dans l'étape c),
en choisissant les conditions de refroidissement dans l'étape c) de manière que le produit de réaction consiste en des composés de bore/lanthanide nanoparticulaires essentiellement isométriques ou contienne des composés de bore/lanthanide nanoparticulaires essentiellement isométriques, les composés de bore/lanthanide nanoparticulaires essentiellement isométriques présentant une distribution de tailles de particules dont l'écart type σ est inférieur à 1,5.

2. Procédé selon la revendication 1, **caractérisé en ce que** dans l'étape b) on effectue le traitement thermique du mélange des composants i), ii) et éventuellement iii) dans le gaz vecteur inerte par plasma par micro-ondes, plasma d'arc, chauffage par convexion/rayonnement, conduite autothermique de la réaction ou une combinaison des méthodes précitées.

3. Procédé selon la revendication 1, **caractérisé en ce que** dans l'étape b) on effectue le traitement thermique du mélange des composants i), ii) et éventuellement iii) dans le gaz vecteur inerte par plasma par micro-ondes.

4. Procédé selon une ou plusieurs des revendications 1 à 3, **caractérisé en ce que** dans l'étape c) on refroidit le produit de réaction obtenu, jusqu'à une température dans la plage de 1 800 °C à 20 °C.

5. Procédé selon une ou plusieurs des revendications 1 à 4, **caractérisé en ce qu'**on utilise comme composant i) un ou plusieurs composés de lanthanides choisis dans le groupe constitué par les hydroxydes de lanthanides, les chalcogénures de lanthanides, les halogénure de lanthanides et des composés mixtes à base desdits composés de lanthanides.

6. Procédé selon une ou plusieurs des revendications 1 à 4, **caractérisé en ce qu'**on utilise comme composant i) un ou plusieurs composés de lanthanides choisis dans le groupe constitué par les hydroxydes de lanthanides, les oxydes de lanthanides, les chlorures de lanthanides, les bromures de lanthanides et des composés mixtes à base desdits composés de lanthanides.

7. Procédé selon une ou plusieurs des revendications 1 à 6, **caractérisé en ce qu'**on utilise comme composant i) un ou plusieurs composés de lanthanides.

8. Procédé selon une ou plusieurs des revendications 1 à 7, **caractérisé en ce qu'**on utilise comme composant ii) un ou plusieurs composés choisis dans le groupe constitué par le bore cristallin, le bore amorphe et des halogénures de bore.

9. Procédé selon une ou plusieurs des revendications 1 à 7, **caractérisé en ce que** qu'on utilise comme composant ii) un ou plusieurs composés choisis dans le groupe constitué par le bore cristallin, le bore amorphe, le trichlorure de bore et le tribromure de bore.

10. Procédé selon une ou plusieurs des revendications 1 à 9, **caractérisé en ce qu'**on l'effectue dans une plage de pression de 500 hPa à 2 000 hPa.
